(19) Europäisches Patentamt / European Patent Office / Office européen des brevets

(11) **EP 4 016 954 B1**

(12) **EUROPEAN PATENT SPECIFICATION**

(45) Date of publication and mention of the grant of the patent:
**20.12.2023 Bulletin 2023/51**

(21) Application number: **20306619.6**

(22) Date of filing: **18.12.2020**

(51) International Patent Classification (IPC):
*H04L 65/1059* (2022.01)    *H04L 65/80* (2022.01)
*H04L 65/612* (2022.01)    *H04L 67/568* (2022.01)
*H04L 67/104* (2022.01)

(52) Cooperative Patent Classification (CPC):
**H04L 65/80; H04L 65/1059; H04L 65/612;
H04L 67/104; H04L 67/568**

(54) **METHOD FOR CONTROLLING A PLAYER PLAYING A DATA STREAM STREAMED IN A PEER-TO-PEER NETWORK**

VERFAHREN ZUR STEUERUNG EINES ABSPIELERS, DER EINEN DATENSTROM ABSPIELT, DER IN EINEM PEER-TO-PEER-NETZWERK GESTREAMT WIRD

PROCÉDÉ POUR COMMANDER UNE LECTURE DE LECTEUR D'UN FLUX DE DONNÉES EN CONTINU DANS UN RÉSEAU DE POSTE À POSTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.06.2022 Bulletin 2022/25**

(73) Proprietor: **Streamroot**
**94110 Arcueil (FR)**

(72) Inventors:
• **DELMAS, Axel**
**75019 PARIS (FR)**
• **MARCAULT, Vivien**
**75116 PARIS (FR)**
• **MUKAM, Igor**
**75020 PARIS (FR)**

• **STORELLI, Alexandre**
**69006 LYON (FR)**

(74) Representative: **Marks & Clerk LLP**
**15 Fetter Lane**
**London EC4A 1BW (GB)**

(56) References cited:
**WO-A1-2020/040741    US-A1- 2020 036 766
US-A1- 2020 351 317**

• **RALITSA KOSTADINOVA: "Peer-to-Peer Video Streaming", THESIS, , 1 January 2008 (2008-01-01), pages 1-53, XP008174179, Retrieved from the Internet: URL:http://www.ee.kth.se/php/modules/publications/reports/2008/XR-EE-LCN2008004.pdf**

**Description**

**TECHNICAL FIELD**

The present invention relates to a method for playing a data stream streamed in a peer-to-peer network.

**BACKGROUND**

"Streaming" designates a method wherein a client device plays a data stream (for instance an audio or a video stream) while said data stream is recovered from the Internet. This contrasts with downloading, which requires the client device to recover all the data of the audio or video content before being able to play it.

In the case of streaming, storing the data stream at the client device is temporary and partial, since data is continuously downloaded in a buffer of the client (typically in a random-access memory of the client device), analyzed on-the-fly by a processor of the client device and quickly transferred to an output interface (a screen and/or loudspeakers) and then replaced with new data.

The data stream is provided by at least one server referred to as "content delivery network", or CDN. The client which desires to play the data stream sends a request to recover first segments therefrom (a segment means a data block of the content, corresponding generally to a few seconds of playback). When there is a sufficient amount of data in the buffer, the playback starts. In the background, the stream is continuously downloaded in order to uninterruptedly supply the buffer with the remaining part of the data stream.

However, it is noticed that this approach has limits if a great number of client devices desire to play the same content simultaneously: the server is found to be saturated, being incapable of providing the content at a sufficient rate for playing to be fluid, and jerks occur.

Recently, an alternative strategy based on "peer-to-peer" (P2P) has been suggested, in which each client device acts as a server for other client devices: they are called peers. A peer which has started playing the data stream can forward to others peers segments it has already received, and so on. This strategy is for instance described in WO 2012/154287.

To implement this P2P strategy, a peer-to-peer cache is allocated in a memory of the client device. This P2P cache comes in addition to the buffer aforementioned. A given segment of the data stream provided by a CDN or from another client device is first stored in the P2P cache. The segment comprises chunks which are downloaded independently from each other. Once all chunks of the segment are present in the P2P cache, said segment can be transferred to the buffer for playback. This P2P strategy is disclosed in document US2020351317.

Usually, a dedicated component of the client device, usually referred to as a "player" or a "media engine", is configured to process data transferred from the P2P cache to the buffer, so as to convert it into audio or video signals able to be rendered by speakers or on a screen. Of course, it is important that the buffer always stores some data pending for playback, in order to ensure playback continuity. To that end, the player is set with a threshold. Whenever an amount of data pending for playback in the buffer is less than the threshold, the player requests further segments of the data stream.

If the next segment of the data stream is available in the P2P cache (i.e. all chunks of said segment have been successfully downloaded), the next segments are transferred from the P2P cache to the buffer in response to the request.

If the next segment is not fully stored in the P2P cache (i.e. at least one chunk of the next segment is missing in the cache), the client device sends a request to a CDN so as to obtain the missing chunks of the next segment as soon as possible.

It has been proposed to shift the threshold used by the player during a playback session as follows. The threshold actually switches between a first value and a second value greater than the first value. Two different cases are to be distinguished: when the threshold is increased (i.e. changed from the first value to the second value), and when the threshold parameter is decreased (i.e. changed from the second value to the first value).

Let us first assume that the threshold has been set to the first value (less than the second value). When the player requests further segments to be transferred from the P2P cache to the buffer, the client device checks whether the next segment requested by the player is fully stored in the P2P cache. If this next segment is not fully stored in the P2P cache, then the threshold used by the player is set to the second value.

Now, let us assume that the threshold has been set to the second value (greater than the first value). When the amount of data pending for playback in the buffer is greater than the threshold (i.e. the second value), then the threshold is set to the first value.

When this method is carried out, the threshold may turn out to oscillate quite quickly between the first value and the second value during playback. This causes undesirable side-effects. First, it stresses the CPU. Second, when the player supports ABR (Adaptive bitrate streaming), this may cause the player to switch very frequently between different encodings, which is unpleasant for a viewer when the stream includes video data.

## SUMMARY

A goal of the present disclosure is to reduce the side-effects aforementioned.

It is therefore proposed, according to a first aspect, a method for controlling a player of a client device, wherein:

- the client device comprises a peer-to-peer cache for storing segments of a data stream in a format adapted for transfers within a peer-to-peer network, each segment comprising chunks,
- the player is configured to:

    o play back segments of the data stream stored in a buffer, and
    o whenever an amount of data pending for playback in the buffer is less than a threshold parameter of the player, request other segments of the data stream to be transferred from the peer-to-peer cache to the buffer,

wherein the method comprises:

- while the threshold parameter of the player has a first value, determining a download completion ratio associated with a reference segment of the data stream, the download completion ratio being representative of a ratio between a number of chunks of the reference segment which are present in the peer-to-peer cache and a total number of chunks of the reference segment,
- computing a score depending on the download completion ratio,
- changing the threshold parameter of the player from the first value to a second value greater than the first value only if the score is less than a second threshold, and
- changing the threshold parameter of the player (14) from the second value to the first value whenever the amount of data pending for playback in the buffer (12) becomes greater than the second value

The method according to the first aspect may further comprise the optional features set forth below, taken alone or in combination whenever it makes sense.

Preferably, the method further comprises changing the threshold parameter of the player from the second value to the first value whenever the amount of data pending for playback in the buffer becomes greater than the second value.

Preferably, the method further comprises changing the threshold parameter of the player from the second value to the first value whenever detecting that a next segment to be transferred in the buffer is a newest segment of the data stream made available for download by a content delivery network.

Preferably, the score increases as the download completion ratio increases.

Preferably, computing the score comprises weighting the download completion radio with a weight, wherein the weight decreases as a playback time offset between the reference segment and a last segment of the data stream played by the player increases.

Preferably, computing the score comprises multiplying the download completion ratio with a total duration of the reference segment.

Preferably, the score increases as the amount of data pending for playback in the buffer increases.

Preferably, the method comprises:

- computing score contributions respectively associated with segments forming a sequence in the data stream, wherein the sequence includes the reference segment,
- computing the score from each score contribution.

Preferably, the score is computed as a sum of

- a first score contribution associated with the data pending in the buffer,
- a second score contribution associated with a first sequence of consecutive segments of the data stream which are fully stored in the peer-to-peer cache, wherein the first sequence is to be played right after the data pending in the buffer,
- a third score contribution associated with a second sequence of consecutive segments of the data stream which are at least partially stored in the peer-to-peer cache, wherein the second sequence is to be played right after the first sequence.

Preferably, the third score contribution increases as $d_i r_i w_i$ increases, wherein

- $d_i$ is a total duration of a i-th segment of the second sequence,

- $r_i$ is a download completion ratio associated with the i-th segment, the download completion ratio being representative of a ratio between a number of chunks of the reference segment which are present in the peer-to-peer cache and a total number of chunks of the reference segment,
- $w_i$ is a weight assigned to the i-th segment such that $w_i$ decreases as an offset between the i-th segment and a last segment of the data stream played by the player increases.

Preferably, $w_i = c^{p_i}$, wherein c is a constant lower or equal to 1, and $p_i$ is a term depending on i.

Preferably, we have

$$p_i = \sum_{j=0}^{j<i} r_j$$

wherein $r_j$ is a download completion ratio associated with a j-th segment of the second sequence that is closer to the last segment played by the player than the i-th segment.

Preferably, the method comprises:

- computing a required completion ratio for the reference segment, such that the required completion ratio decreases as a playback time offset between the reference segment and a last segment of the data stream played by the player increases,
- if the completion ratio of the incomplete segment is less than the required completion ratio, computing the score such that the threshold parameter of the player is set to the second value.

According to a second aspect, it is also proposed a non-transitory computer-readable medium for a client device, the client device comprising:

- a peer-to-peer cache for storing segments of a data stream in a format adapted for transfers within a peer-to-peer network, each segment comprising multiple chunks,
- a player is configured to:

  o play segments of the data stream stored in a buffer, and
  o whenever a quantity of segments not yet played in the buffer is below a configurable threshold, requesting further segments of the data stream to be transferred from the peer-to-peer cache to the buffer

wherein the medium comprises code instructions for causing the client device to perform the method according to the first aspect.

According to a third aspect, there is provided a method for controlling a player (14) of a client device, wherein:

the client device comprises a peer-to-peer cache (10) for storing segments of a data stream in a format adapted for transfers within a peer-to-peer network, each segment comprising chunks,

- the player (14) is configured to:

  o play back segments of the data stream stored in a buffer (12), and
  o whenever an amount of data pending for playback in the buffer (12) is less than a threshold parameter of the player (14), request other segments of the data stream to be transferred from the peer-to-peer cache (10) to the buffer (12),

wherein the method comprises:

- while the threshold parameter of the player (14) has a first value, determining (100) a download completion ratio associated with a reference segment of the data stream, the download completion ratio being representative of a ratio between a number of chunks of the reference segment which are present in the peer-to-peer cache (10) and a total number of chunks of the reference segment, wherein the download completion ration is a required completion ratio decreasing as a playback time offset between the reference segment and a last segment of the data stream played by the player (14) increases,
- computing (102) a score depending on the download completion ratio

- changing (106) the threshold parameter of the player (14) from the first value to a second value greater than the first value only if the score meets a predefined condition, wherein the predefined condition is met when the completion ratio of the incomplete segment is less than the required completion ratio, and
- changing the threshold parameter of the player (14) from the second value to the first value whenever the amount of data pending for playback in the buffer (12) becomes greater than the second value.

## DESCRIPTION OF THE DRAWINGS

The above and other objects, features and advantages of this invention will be apparent in the following detailed description of an illustrative embodiment thereof, which is to be read in connection with the accompanying drawings wherein:

- Fig. 1 represents a network architecture for implementing the method according to the invention.
- Fig. 2 schematically shows components of a client device.
- Fig. 3 shows steps of a method for controlling a player.
- Fig. 4 illustrates portions of a data stream stored in a buffer and a peer-to-peer cache of a client device.
- Fig. 5 is a visual representation of how a score is computed, in a first embodiment.
- Fig. 6 is a visual representation of how a score is computed, in a second embodiment.

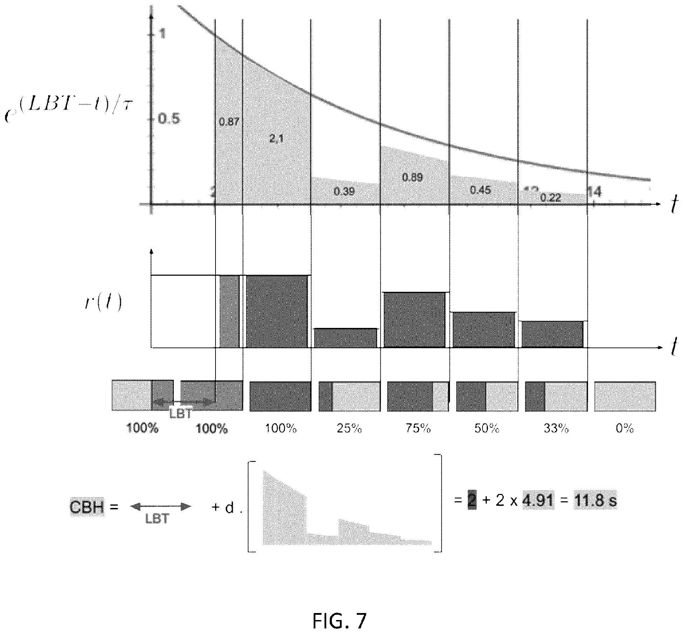

- Fig. 7 is a visual representation of how a score is computed, in a third embodiment.
- Fig. 8 is a visual representation of how a score is computed, in a fourth embodiment.

## DETAILED DESCRIPTION OF A PREFERRED EMBODIMENT

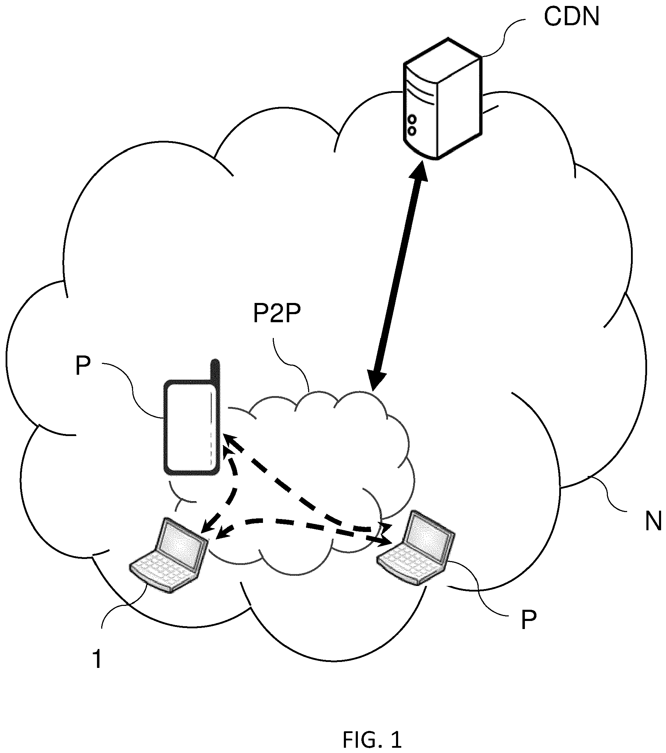

Referring to **figure 1,** a network N includes a CDN (Content Delivery Network), as well as a peer-to-peer network P2P, referred to in the following as "P2P network".

The peer-to-peer network P2P includes several client devices, including a client device 1 and further client devices P. The client devices 1, P are peers in the P2P network.

The CDN comprises at least one providing a data stream in accordance with a given streaming protocol. The data stream comprises a sequence of segments which are supposed to be played successively by any client such as client device 1.

It is to be noted that each segment of the data stream comprises multiple chunks. Each chunk is a portion of the data stream which can be transferred in the P2P network, especially in the P2P network, independently of other chunks.

The CDN is the primary source of the data stream, insofar as initially no peer of network N2 has segments thereof. The data stream may be stored in its entirety by the CDN before it is transferred in the P2P network (in the case of VOD), or may be generated in real time (in the case of live streaming).

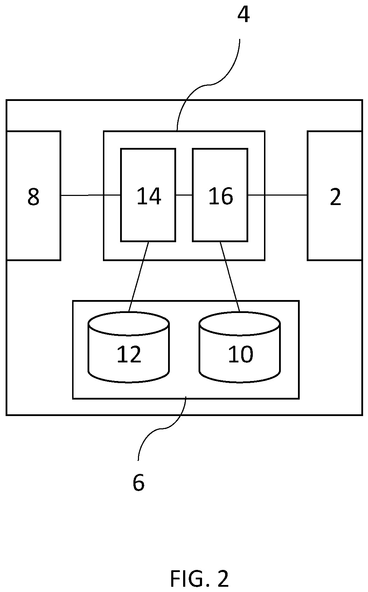

Referring to **figure 2,** the client device 1 comprises a communication interface 2, a data processing unit 4, a storage unit 6 and an output interface 8.

The communication interface 2 is able to connect to network N such that the client device 1 can receive portions of the data stream from the CDN or any peer P.

The output interface comprises 8 a screen and/or speakers.

The storage unit 6 includes a volatile memory such as random-access memory. Two zones are allocated in the volatile memory: a P2P-cache 10 and a buffer 12 as described in the introduction of the present disclosure.

The P2P cache 10 is designed to store segments of the data stream in a first format suitable for transfers in the P2P network. This format is not necessarily suitable for playback.

The smallest portion of the data stream which can be transferred from the network in the P2P cache 10 is a chunk, which is smaller than a segment. In other words, the P2P cache 10 is able to store some chunks of a given segment whereas other chunks of the segment are missing in the P2P cache 10. Besides, chunks are not necessarily received in chronological (playback) order. As a consequence, there may be discontinuities in the chunks stored at some point in the P2P cache 10.

Transferring a segment present in the P2P to the buffer 12 does not imply that said segment is immediately deleted from the P2P cache 10. A copy of the segment may be kept in the P2P cache 10, such that the client device 1 can seed it to other peers P.

As already explained in the background section of the present disclosure, the buffer 12 is designed to store consecutive portions of the data stream. A segment of the data stream is the smallest portion of the data stream which can be transferred from the P2P cache 10 to the buffer 12.

The data processing unit comprises a player 14 and a P2P controller 16.

The player 14 is configured to play portions of the data stream stored in the buffer 12 so as to convert them into signals able to be rendered by the output interface.

Furthermore, player 14 is configured to request further segments of the data stream, whenever an amount of data pending for playback in the buffer 12 is below a threshold BT (sometimes referred to as "Buffer Target", hence the BT acronym). This threshold is actually a configurable parameter of the player. Thus, this threshold will be referred to as threshold parameter BT hereinafter.

The P2P controller 16 is actually configured to access the P2P cache 10, interact with the player 14 and interact as well with chunk providers (the CDN and peers P). In particular, the P2P controller 16 is configured to adjust the threshold parameter BT used by the player 14, manage data transfers in the P2P network, and feed the buffer 12 with new segments in response to requests of the player 14.

For example, the player 14 and the P2P controller 16 form a non-transitory computer program executed by at least one of the processors of the data processing unit 4. This computer program may for instance be a dedicated application, an internet browser in particular HTML5 compatible, an operating system module, etc. The player 14 and the P2P controller 16 may be distinct computer program modules. In particular, the player 14 may be able to play data coming from other sources than the P2P cache 10. Thus, the P2P controller 16 may be regarded as a separate component coming in addition to the player 14.

A method carried out jointly by the player 14 and the P2P controller 16 for playing the data stream at the client device 1 comprises the steps described below.

**Data stream playback method**

In a preliminary step, the P2P cache 10 and the buffer 12 are allocated in the storage unit 6 of the client device 1.

Besides, the P2P sets the threshold parameter BT of the player 14 to an initial value.

The client device 1 regularly receives chunks of the data stream from the network. When the communication interface downloads a chunk of the data stream from the CDN or from a peer P, the P2P controller 16 stores the downloaded chunk in the P2P cache 10. From this point on, the chunk becomes available from the client device 1 to other peers P in the P2P network. As already explained above, a chunk is a portion of a segment of the data stream. When all chunks of a given segment are stored in the P2P cache 10, the segment is "complete".

At some point, the P2P controller 16 receives a request sent by the player 14. The request actually requests new segments of the data stream to be transferred from the P2P cache 10 to the buffer 12. As explained before, this request is actually sent by the player 14 whenever the player detects that an amount of data pending for playback in the buffer 12 is below the threshold parameter BT of the player 14 (in other words, when the player 14 is "starving").

Upon receiving the request, the P2P controller 16 checks whether at least one next segment (to be played right after the data pending in the buffer 12) is fully stored in the P2P cache 10.

If all chunks of the next segment are present in the P2P cache 10, then the P2P controller 16 recombines them so as to generate the next segment in a format suitable for playback, and transfers it into the buffer 12, such that the player 14 can play it. The chunks of each segment transferred to the buffer 12 may remain in the P2P cache 10 so as to be transferred to peers P.

If some chunks of the next segment are missing in the P2P cache 10, the P2P controller 16 generates a request which requests the missing chunks. This request is sent to the CDN, such that the CDN supplies the client device 1 with the missing chunks.

During the playback method described above, the P2P controller 16 is responsible for adapting the value of threshold parameter BT. "This check may be for instance carried out each time the player 14 requests new segments to be transferred in the buffer 12, or periodically".

For the sake of clarity, it will be assumed hereinafter that the P2P controller 16 causes the threshold parameter BT of the player 14 to switch between a first value LBT (Lower Buffer Target) and second value HBT (Higher Buffer Target), wherein $LBT < HBT$. However, the present disclosure is not limited to this particular case, since the P2P controller 16 could set the threshold parameter BT to more than two different values in other embodiments.

Two different cases are to be distinguished: when the P2P controller 16 increases the threshold parameter BT (the threshold parameter BT switches from LBT to HBT), and when the P2P controller 16 decreases the threshold parameter BT (the threshold parameter BT switches from HBT to LBT).

**Conditions for decreasing the threshold parameter BT of the player (HBT->LBT transition)**

Let us assume that the threshold parameter BT has been set to the second value HBT (greater than the first value LBT).

The P2P controller 14 determines the amount of data pending for playback in the buffer 12, for instance by asking the player 14 for this piece of information.

If the amount of data pending for playback in buffer 12 is greater than the current value of the threshold, then the threshold parameter BT of the player 14 is decreased. For that purpose, the P2P controller 16 sets the threshold parameter BT to the first value LBT.

It has been noted earlier that the data stream is stored by the CDN. However, in a live streaming context, new segments of the data stream are regularly generated by the CDN thus become available for download and playback by remote peers (including the client device 1). Any new segment generated by the CDN is of course to be played after the other pre-existing segments. The newest segment generated by the CDN is usually referred to as the "live edge" segment of the data stream.

A critical situation is when the player 14 consumes segments at a rate greater than the rate of generation of new segments by the CDN, such that the client device 1 may end up in a state wherein the "live edge segment" is or will be requested by the player very soon.

To take this situation into account, the P2P controller 16 sets the threshold parameter BT to the first value LBT also whenever it detects that the "live edge segment" has been entirely downloaded in the P2P cache 10. The P2P controller 16 can detect this situation by accessing a manifest updated and published by the CDN.

**Conditions for increasing the threshold parameter BT of the player (LBT->HBT transition)**

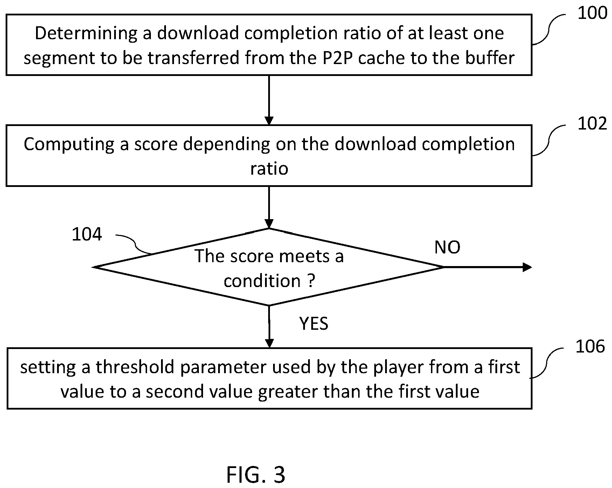

Now, let us assume that the threshold parameter BT has been set to the first value (less than the first value). In reference to **figure 3,** the P2P controller performs the steps set forth below.

For at least one segment of the data stream which has not been already transferred to the buffer, referred to as "reference segment" hereinafter, the P2P controller 16 determines a download completion ratio associated with the reference segment (step 100). The download completion ratio is actually representative of a ratio between a number of chunks of the reference segment which are present in the P2P cache 10 and a total number of chunks of the reference segment in the data stream. For example, the download completion ratio is 100 % whenever all chunks of the reference segments are present in the P2P cache 10, 0 % whenever no chunk of the reference segment has been downloaded, and 50% when half of the chunks of the reference segment are missing in the P2P cache 10.

Multiple download completion ratios respectively associated with consecutive segments forming a sequence in the data stream (in the sense that the segments of the sequence are supposed to be played consecutively by the player 14), including the next segment to be transferred to the buffer 12, may be determined at step 100. In other words, the P2P determines many download completion ratios respectively associated with the segments of the sequence.

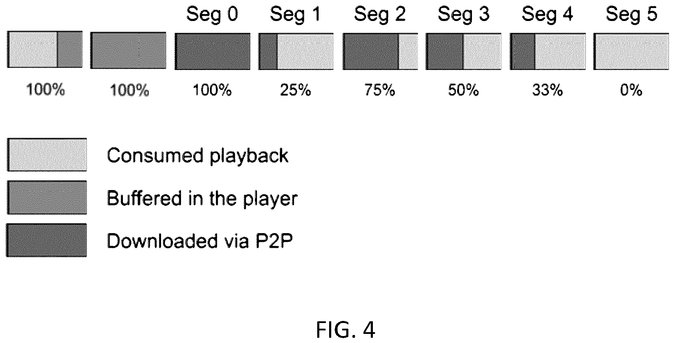

**Figure 4** illustrates an example of content stored at some point in the P2P cache 10 and in the buffer 12 while the stream is being played back. The order of playback of the segments is left to right in figure 4. In this example, download completion ratios respectively associated with six segments Seg 0 to Seg 5 can be determined by the P2P controller 16. Seg 0 is the next segment to be transferred in the buffer 12, and is fully present in the P2P cache 10. As a result, the download completion ratio associated with Seg 0 is 100 %. It can be seen that some chunks of segments Seg 1, which is a segment to be played right after Seg 0, are missing in the P2P cache 10, since the download completion ratio associated with Seg 1 is 25 %. Seg 2, Seg 3 and Seg 4 are in the same situation. No chunk of segment Seg 5 is stored in the P2P cache 10, which means that the download completion ratio associated with Seg 5 is 0 %.

Then, the P2P controller 16 computes a score CBH depending on at least one of the determined ratios (step 102).

Then, the P2P controller 16 checks whether the score CBH meets a predefined condition (step 104).

If the predefined condition is met, then the P2P controller 16 sets the threshold parameter BT of the player 14 to the second value (step 106).

If the predefined condition is not met, then the P2P controller 16 leaves the threshold parameter BT of the player 14 unchanged. In other words, step 106 is not carried out.

Steps 102, 103, 104 can be performed whenever the P2P controller receives a request issued by the player, or periodically.

An important aspect of this method is that the decision to increase the threshold parameter of the player 14 depends on at least one download completion ratio of a segment, which can have any value between 0 % and 100 %. This ratio is therefore a much more relevant information than a Boolean merely indicating whether a segment is complete or not. This makes it possible for the P2P controller 16 to be tolerant, in the sense that it may decide to leave the threshold unchanged when the download completion ratio of the next segment to be transferred to the buffer 12 is less than 100%, but very close to this value (for example 99% value).

Different embodiments for computing the score at step 102 and checking it at step 104 are possible. Four of them are described below.

**1) First embodiment: "exponential decay"**

In a first embodiment, the score CBH is computed from different score contributions respectively associated with different segments forming a sequence in the data stream.

The P2P controller 16 computes a first score contribution BH ("Buffer Health") which is associated with the data pending for playback in the buffer 12. More precisely, the first score contribution is the duration of said data pending in the buffer 12.

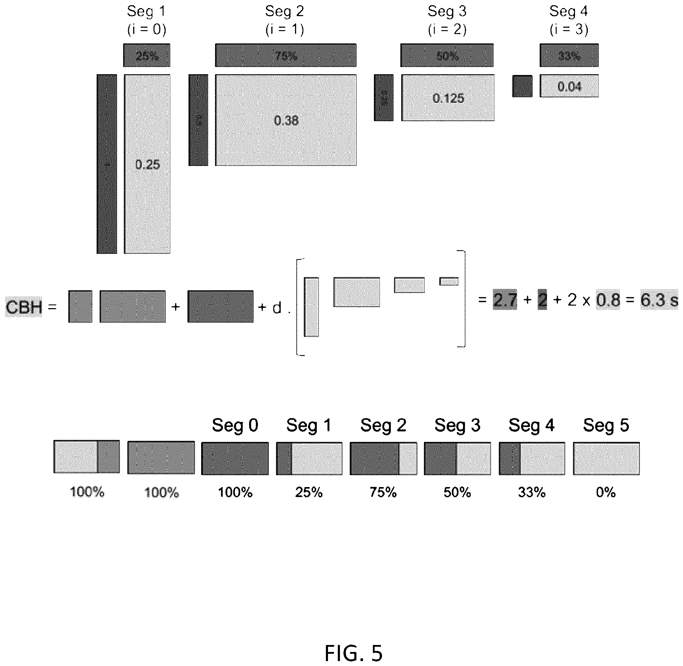

In the example illustrated in **figure 5,** the data pending in the buffer 12 covers nearly a segment and a half.

The P2P controller 16 computes a second score contribution, noted *CCD,* associated with a first sequence of consecutive segments of the data stream which are fully stored in the peer-to-peer cache. The first sequence is to be played right after the data pending in the buffer 12. In other words, the first sequence immediately follows the data pending in the buffer 12 in the data stream. Since the segments of the first sequence (if any) are fully stored in the P2P cache 10, CCD actually represents a continuous portion of the data stream ready to be transferred to the buffer 12.

More precisely, the second score contribution is the duration of the first sequence.

When the first sequence is empty, the second score contribution CCD is equal to zero. This occurs if at least one chunk of the next segment to be transferred in the buffer 12 is missing in the P2P cache 10.

In the example illustrated in **figure 5,** the first sequence includes a single segment, which is Seg 0.

A third score contribution, noted *DCD,* is a score contribution associated with a second sequence of consecutive segments of the data stream which are at least partially stored in the P2P cache 10. The second sequence is to be played right after the first sequence. In other words, the second sequence immediately follows the first sequence in the data stream. At least the first segment of the second sequence is incomplete in the sense that the download completion ratio associated with the first segment is strictly less than 100 % (it may even be 0 %). The first segment of the second sequence is actually the first segment of the data stream which is not fully stored in the P2P cache 10. Therefore, DCD represents chunks separated from the last segment of the first sequence by at least one gap. Of course, no segment of the second sequence can be transferred to buffer 12 since the very first segment of the second sequence is incomplete in the P2P cache 10.

When there is no segment of the second sequence in the P2P cache 10, the third score contribution DCD is equal to zero. This can for example occur when the P2P cache is 100 % filled with complete segments.

In the example illustrated in **figure 5,** the second sequence includes segments Seg 1 to Seg 5. The first segment of the second sequence is Seg 1 since its download completion ratio is 25 % only.

The third score contribution *DCD* is less than the duration of the second sequence, so as to reflect that the segments of the second sequence are incomplete in the P2P cache 10.

Let N be the number of segments in the second sequence. The segments of the second sequence have respective indices going from 0 to N-1, which corresponds to their playback order. This means that the very first segment of the second sequence to be played has the index i=0.

DCD is computed as follows:

$$DCD = \sum_{i=0}^{N-1} d_i r_i w_i$$

wherein:

- $d_i$ is a total duration of a i-th segment of the second sequence. $d_i$ is equal to the sum of the durations of all chunks of the i-th segment (including the missing chunks).
- $r_i$ is the download completion ratio associated with the i-th segment.
- $w_i$ is a weight assigned to the i-th segment.

The weight $w_i$ decreases (strictly or not) as an offset between the i-th segment and a last segment of the data stream played by the player 14 increases. This means that $w_0 \geq w_1 \geq \cdots \geq w_{N-1}$. Thanks to this rule, a segment to be played soon shall contribute more to the final score CBH than a segment to be played in a long time.

The weight has the following form:

$$w_i = c^{p_i}$$

wherein c is a constant value lower or equal to 1, and $p_i$ is a term depending on *i*. As a result, the contribution of an incomplete segment decreases exponentially with its position in the data stream.

In the first embodiment, $p_i = i$. Thus:

$$CBH = BH + CCD + \sum_{i=0}^{N-1} d_i r_i c^i$$

In the first embodiment:

- CBH increases as the download completion ratio $r_i$ associated with an i-th segment increases;
- $r_i$ is weighted by weight $w_i$, which decreases (strictly or not) as the playback time offset between the i-th segment and a last segment of the data stream played by the player increases.
- $r_i$ is scaled to time units by multiplying it by the total duration $d_i$ of the i-th reference segment, so that the final result can be added to BH and CCD.

**Figure 5** visually summarizes how the score CBH is computed in the first embodiment when the buffer 12 and the P2P cache 10 have the content shown in figure 4. In this example, it is assumed that all segments have the same total duration (2 seconds), and that c=0.5. Thus:

- The first score contribution BH is equal to 2.7 seconds.
- The second score contribution CCD is equal to 2 seconds (there is one single complete segment, Seg 0, in the P2P cache 10 and next to the data pending for playback in buffer 12).
- The third score contribution is the sum of four terms respectively associated with segments Seg 1 to Seg 4, each term being represented by a rectangular area reflecting the value of $r_i w_i$. For example, Seg 1 is 25 % complete. Since Seg 1 is the first incomplete segment in the P2P cache 10, Seg 1 has the index i=0. The weight $w_0$ assigned to Seg 1 is 0.25.

As already explained, the P2P controller 16 checks whether the score CBH meets a predefined condition at step 104. Then the P2P controller 16 sets the threshold parameter BT of the player 14 to the second value at step 106 only if the score CBH meets a predefined condition.

In the first embodiment, the score CBH is compared with a second threshold, noted CBT ("Combined Buffer Target"). CBT is distinct from the threshold parameter BT used by player 14 to trigger segment requests. The second threshold CBT is predefined and is not supposed to change during playback. The predefined condition is met if and only if the score CBH is less than the second threshold.

As a consequence, if there is a sufficient amount of data pending for playback in the client device 1 (in the buffer 12 and/or in the P2P cache 10), the threshold parameter BT may not be increased. In contrast, when there is a lower amount of data pending for playback in the client device 1, the P2P controller 16 is more likely to increase the threshold parameter BT of the player 14.

**2) Second embodiment: "continuous exponents"**

In a second embodiment, the score CBH is computing as follows:

$$CBH = BH + \sum_{i=0}^{N-1} d_i r_i c^{\sum_{j=0}^{j<i} r_j}$$

Although it implements a similar logic, the second embodiment has the following difference with the first embodiment.

It can be seen that there is no more distinction between the second score contribution and the third contribution in this formula. The sum in the right part of the formula covers all segments partially or fully present in the P2P cache 10, which means that complete segments of the first sequence are weighted as well, which is not the case in the first embodiment. In other words, index i=0 is assigned to the very next segment to be transferred to the buffer 12 whatever its download completion ratio (Seg 0 in the example illustrated in figure 4), rather than to the first incomplete segment as in the first embodiment (Seg 1 in the illustrated example).

Besides, in the second embodiment, we have:

$$p(i) = \sum_{j=0}^{j<i} r_j$$

This means that the weights $w_i$ assigned to the segments of the second sequence are computed differently than in the first embodiment. This is advantageous for the reasons set forth below.

As explained before, computing the score CBH is repeated over time. Of course, the content of the buffer 12 and the P2P cache 10 evolves, which means that the score CBH evolves as well. In the first embodiment, the score CBH may be very unstable in the sense that two consecutive computations of this score may lead to very different values. This can happen in the situation where the score CBH is computed before then after a segment gets completed in the P2P cache 10. This causes the CCD contribution of the score to increase significantly (the DCD contribution varies as well but usually less than the CCD contribution).

This instability is not desired. This instability is actually limited in the second embodiment thanks to the way the weights are computed.

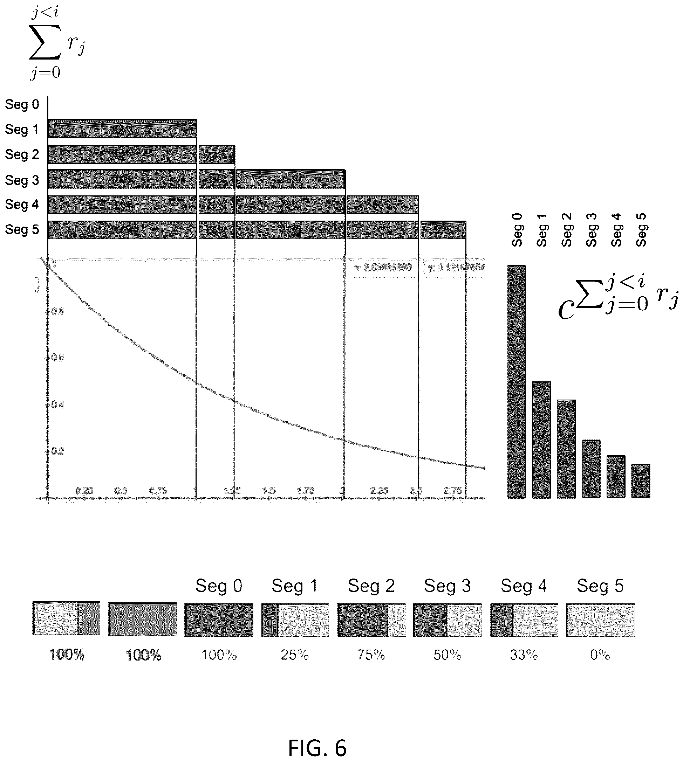

**Figure 6** is a visual representation of the computation of the weights $w_i$ from constant c used as a base and p(i) used as a power in the second embodiment. For example, the power p(2) associated with Seg 2 is equal to 100 % + 25 % = 125 % = 1.25 (see the horizontal bars on top of the curve of figure 6). Assuming that c=0.5, we obtain $w_2$ = 0.42 (see the vertical bars at the right of the curve).

Like in the first embodiment, the score CBH is compared with the second threshold (distinct from the threshold parameter BT used by the player 14 to trigger segment requests) at step 104. The predefined condition is met if and only if the score CBH is less than the second threshold.

### 3) Third embodiment: "anchored exponential decay"

In a third embodiment, the score CBH is computed as follows:

$$CBH = LBT + \int_{LBT}^{\infty} r(t).e^{\frac{(LBT-t)}{\tau}}dt$$

As said above, LBT is the current value set as threshold parameter BT.

The integral involved in this formula is a score contribution associated with segments present in the P2P cache 10 and any remaining data pending in the buffer 12 not already covered by score contribution LBT. The variable t actually corresponds to a time offset from the current time position of the player 14 in the data stream.

$r(t)$ is a function constructed from the download completion ratios associated with the segments present in the buffer 12 and in the P2P cache 10.

The decreasing exponential term $e^{\frac{(LBT-t)}{\tau}}$ is actually a weighing function which is a continuous equivalent to the discrete weights $w_i$ involved in the first and second embodiments. $\tau$ is a constant. t is greater or equal to LBT such that the weighting function is always between zero and 1.

Like in the second embodiment, the score CBH as computed in the third embodiment remains quite stable over time.

Like in the first embodiment and in the second embodiment, the score CBH is compared with the second threshold (distinct from the threshold parameter BT used by the player 14 to trigger segment requests) at step 104. The predefined condition is met if and only if the score CBH is less than the second threshold.

### 4) Fourth embodiment: "cache funnel"

It can be seen that in the first, second and third embodiments score contributions of many segments partially or totally stored in the buffer 12 or in the P2P cache 10 are summed so as to obtain an overall score. In other words, the score represents an amount of data stored in the buffer and in the P2P cache, and takes into account discontinuities in said data.

In a fourth embodiment, the score is computed using a different logic.

Required completion ratios for consecutive segments to be transferred next to the buffer 12 are computed. It is to be noted that the required completion ratio computed for a reference segment among said consecutive segments decreases as the playback time offset between the reference segment and a last segment of the data stream played by the player 14 increases.

The download completion ratio associated with a reference segment is compared with the required ratio computed for the reference segment.

The score is a Boolean score. The score is set to:

- a value (for example 1) if all the segments have a download completion ratio which is not less than the corresponding required ratio.
- another value (for example -1) if at least one of the segments the segments have a download completion ratio less than the corresponding required ratio.

The score can for instance be computed as indicated in the pseudo-code below:

```
function requiredCompletion(t) { // t relative to LBT

    // 1 at LBT
    // 0 at CBT
    // linear profile in between
    return 1 - (t - LBT) / (CBT - LBT);
}

function getScore() {
    for (segment in segmentsAfterLBT) {
        if (completion(segment) < requiredCompletion(segment.t)) {
            return -1;
        }
    }
    return 1;
}
```

As shown in the pseudo-code above, the fourth embodiment does not strictly require all required ratios to be computed. Said ratios may be computed sequentially in a loop starting with the very next segment to be transferred from the P2P cache 10 to the buffer 12 (Seg 0 in the example discussed so far and illustrated in **figure 4**). The loop can end as soon as a segment is found having a download completion ratio less than its required threshold. In practice, this means that the score (returned by code function getscore) may depend on only one segment.

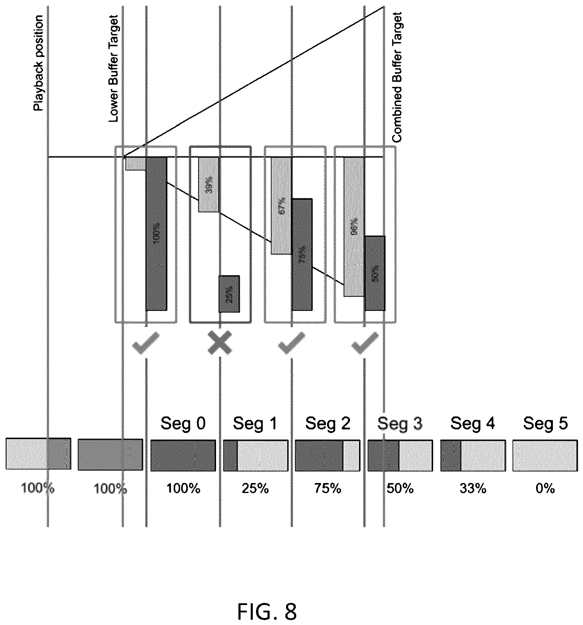

The logic implemented in the fourth embodiment is illustrated in **figure 8.** Two vertical bars in a rectangle are associated with each segment in the P2P cache 10: the bar on the right is the download completion ratio of the segment and the bar on the left is 1 minus the required ratio for that segment. In this example, the download completion ratio of Seg 1 is 25 %, and 1 minus the required ratio for Seg 1 is 39 %, thus the required ratio is 61 %. In other words, the download completion ratio of Seg 1 (25 %) is less than the corresponding required ratio (61 %). As a consequence, the score is set to -1.

As in the previous embodiments, the P2P controller 16 checks whether the score meets a predefined condition, and sets the threshold parameter BT of the player 14 to the second value only if this condition is met.

In the fourth embodiment, this condition is met if and only if the score is -1. In other words, in the fourth embodiment, the threshold parameter BT of the player 14 is switched from to the first value LBT to the second value HBT only if at least one segment in the cache has a download completion ratio less than the corresponding required ratio.

**Claims**

1. A method for controlling a player (14) of a client device, wherein:

   • the client device comprises a peer-to-peer cache (10) for storing segments of a data stream in a format adapted for transfers within a peer-to-peer network, each segment comprising chunks,
   • the player (14) is configured to:

      ◦ play back segments of the data stream stored in a buffer (12), and
      ◦ whenever an amount of data pending for playback in the buffer (12) is less than a threshold parameter of the player (14), request other segments of the data stream to be transferred from the peer-to-peer cache (10) to the buffer (12),

wherein the method comprises:

• while the threshold parameter of the player (14) has a first value, determining (100) a download completion ratio associated with a reference segment of the data stream, the download completion ratio being representative of a ratio between a number of chunks of the reference segment which are present in the peer-to-peer cache (10) and a total number of chunks of the reference segment,
• computing (102) a score depending on the download completion ratio, wherein the score increases as the download completion ratio increases,
• changing (106) the threshold parameter of the player (14) from the first value to a second value greater than the first value only if the score is less than a second threshold, and
• changing the threshold parameter of the player (14) from the second value to the first value whenever the amount of data pending for playback in the buffer (12) becomes greater than the second value.

2. The method of claim 1, further comprising:

• changing the threshold parameter of the player (14) from the second value to the first value whenever detecting that a next segment to be transferred in the buffer (12) is a newest segment of the data stream made available for download by a content delivery network.

3. the method of claims 1 or 2, wherein computing the score (102) comprises weighting the download completion radio with a weight, wherein the weight decreases as a playback time offset between the reference segment and a last segment of the data stream played by the player (14) increases.

4. The method of any one of claims 1 to 3, wherein computing the score (102) comprises multiplying the download completion ratio with a total duration of the reference segment.

5. The method of any one of claims 1 to 4, wherein the score increases as the amount of data pending for playback in the buffer (12) increases.

6. The method of any one of claims 1 to 5, comprising:

• computing score contributions respectively associated with segments forming a sequence in the data stream, wherein the sequence includes the reference segment,
• computing the score from each score contribution.

7. The method of any one of claims 1 to 6, wherein the score is computed as a sum of

• a first score contribution associated with the data pending in the buffer (12),
• a second score contribution associated with a first sequence of consecutive segments of the data stream which are fully stored in the peer-to-peer cache (10), wherein the first sequence is to be played right after the data pending in the buffer (12),
• a third score contribution associated with a second sequence of consecutive segments of the data stream which are at least partially stored in the peer-to-peer cache (10), wherein the second sequence is to be played right after the first sequence.

8. The method of claim 7, wherein the third score contribution increases as $d_i r_i w_i$ increases, wherein

• $d_i$ is a total duration of a i-th segment of the second sequence,
• $r_i$ is a download completion ratio associated with the i-th segment, the download completion ratio being representative of a ratio between a number of chunks of the reference segment which are present in the peer-to-peer cache (10) and a total number of chunks of the reference segment,
• $w_i$ is a weight assigned to the i-th segment such that $w_i$ decreases as an offset between the i-th segment and a last segment of the data stream played by the player (14) increases.

9. The method of claim 8, wherein $w_i = c^{p_i}$, wherein c is a constant lower or equal to 1, and $p_i$ is a term depending on $i$.

**10.** The method of claim 8, wherein

$$p_i = \sum_{j=0}^{j<i} r_j$$

wherein $r_j$ is a download completion ratio associated with a j-th segment of the second sequence that is closer to the last segment played by the player (14) than the i-th segment.

**11.** A method for controlling a player (14) of a client device, wherein:

- the client device comprises a peer-to-peer cache (10) for storing segments of a data stream in a format adapted for transfers within a peer-to-peer network, each segment comprising chunks,
- the player (14) is configured to:

  o play back segments of the data stream stored in a buffer (12), and
  o whenever an amount of data pending for playback in the buffer (12) is less than a threshold parameter of the player (14), request other segments of the data stream to be transferred from the peer-to-peer cache (10) to the buffer (12),

wherein the method comprises:

- while the threshold parameter of the player (14) has a first value, determining (100) a download completion ratio associated with a reference segment of the data stream, the download completion ratio being representative of a ratio between a number of chunks of the reference segment which are present in the peer-to-peer cache (10) and a total number of chunks of the reference segment, wherein the download completion ration is a required completion ratio decreasing as a playback time offset between the reference segment and a last segment of the data stream played by the player (14) increases,
- computing (102) a score depending on the download completion ratio
- changing (106) the threshold parameter of the player (14) from the first value to a second value greater than the first value only if the score meets a predefined condition, wherein the predefined condition is met when the completion ratio of the incomplete segment is less than the required completion ratio, and
- changing the threshold parameter of the player (14) from the second value to the first value whenever the amount of data pending for playback in the buffer (12) becomes greater than the second value.

**12.** A non-transitory computer-readable medium for a client device, the client device comprising:

- a peer-to-peer cache (10) for storing segments of a data stream in a format adapted for transfers within a peer-to-peer network, each segment comprising multiple chunks,
- a player (14) is configured to:

  ∘ play segments of the data stream stored in a buffer (12), and
  ∘ whenever a quantity of segments not yet played in the buffer (12) is below a configurable threshold, requesting further segments of the data stream to be transferred from the peer-to-peer cache (10) to the buffer (12)

wherein the medium comprises code instructions for causing the client device to perform the method of any one of claims 1 to 11 for controlling the player (14).

**Patentansprüche**

**1.** Verfahren zur Steuerung eines Players (14) einer Client-Vorrichtung, wobei:

- die Client-Vorrichtung einen Peer-to-Peer-Cache (10) zum Speichern von Segmenten eines Datenstroms in einem Format umfasst, das für Übertragungen innerhalb eines Peer-to-Peer-Netzwerks geeignet ist, wobei jedes Segment Chunks umfasst,

• der Player (14) konfiguriert ist, zum:

  ◦ Abspielen von in einem Puffer (12) gespeicherten Segmenten des Datenstroms, und
  ◦ Anfordern, sobald eine zur Wiedergabe anstehende Datenmenge in dem Puffer (12) kleiner ist als ein Schwellenwertparameter des Players (14), dass andere Segmente des Datenstroms von dem Peer-to-Peer-Cache (10) zu dem Puffer (12) übertragen werden,

wobei das Verfahren Folgendes umfasst:

  • während der Schwellenwertparameter des Players (14) einen ersten Wert aufweist, Bestimmen (100) eines Download-Abschlussverhältnisses, das einem Referenzsegment des Datenstroms zugeordnet ist, wobei das Download-Abschlussverhältnis ein Verhältnis zwischen einer Anzahl von Chunks des Referenzsegments, die in dem Peer-to-Peer-Cache (10) vorhanden sind, und einer Gesamtzahl von Chunks des Referenzsegments darstellt,
  • Berechnen (102) einer Punktzahl in Abhängigkeit von dem Download-Abschlussverhältnis, wobei die Punktzahl mit zunehmendem Download-Abschlussverhältnis steigt,
  • Ändern (106) des Schwellenwertparameters des Players (14) von dem ersten Wert auf einen zweiten Wert, der größer als der erste Wert ist, nur dann, wenn die Punktzahl kleiner als ein zweiter Schwellenwert ist, und
  • Ändern des Schwellenwertparameters des Players (14) von dem zweiten Wert auf den ersten Wert, sobald die Menge der zur Wiedergabe anstehenden Daten im Puffer (12) größer als der zweite Wert wird.

**2.** Verfahren nach Anspruch 1, ferner umfassend:

  • Ändern des Schwellenwertparameters des Players (14) von dem zweiten Wert auf den ersten Wert, sobald erkannt wird, dass ein nächstes in dem Puffer (12) zu übertragendes Segment ein neuestes Segment des Datenstroms ist, das von einem Content Delivery Network zum Herunterladen bereitgestellt wird.

**3.** Verfahren nach Anspruch 1 oder 2, wobei das Berechnen der Punktzahl (102) das Gewichten des Download-Abschlussverhältnisses mit einer Gewichtung umfasst, wobei die Gewichtung abnimmt, während ein Wiedergabeversatz zwischen dem Referenzsegment und einem letzten Segment des Datenstroms, der durch den Player (14) wiedergeben wird, steigt.

**4.** Verfahren nach einem der Ansprüche 1 bis 3, wobei das Berechnen der Punktzahl (102) das Multiplizieren des Download-Abschlussverhältnisses mit einer Gesamtdauer des Referenzsegments umfasst.

**5.** Verfahren nach einem der Ansprüche 1 bis 4, wobei die Punktzahl mit zunehmender Menge der zur Wiedergabe anstehenden Daten im Puffer (12) steigt.

**6.** Verfahren nach einem der Ansprüche 1 bis 5, umfassend:

  • Berechnen von Punktzahl-Beiträgen, die jeweils Segmenten zugeordnet sind, die eine Sequenz in dem Datenstrom bilden, wobei die Sequenz das Referenzsegment einschließt,
  • Berechnen der Punktzahl aus jedem Punktzahl-Beitrag.

**7.** Verfahren nach einem der Ansprüche 1 bis 6, wobei die Punktzahl berechnet wird als Summe von

  • einen ersten Punktzahl-Beitrag, der den im Puffer (12) anstehenden Daten zugeordnet ist,
  • einen zweiten Punktzahl-Beitrag, der einer ersten Sequenz von aufeinanderfolgenden Segmenten des Datenstroms zugeordnet ist, die vollständig im Peer-to-Peer-Cache (10) gespeichert sind, wobei die erste Sequenz direkt nach den im Puffer (12) anstehenden Daten abgespielt werden soll,
  • einen dritten Punktzahl-Beitrag, der einer zweiten Sequenz von aufeinanderfolgenden Segmenten des Datenstroms zugeordnet ist, die mindestens teilweise im Peer-to-Peer-Cache (10) gespeichert sind, wobei die zweite Sequenz direkt nach der ersten Sequenz abgespielt werden soll.

**8.** Verfahren nach Anspruch 7, wobei der dritte Punktzahl-Beitrag mit zunehmendem $d_i r_i w_i$ zunimmt, wobei

  • $d_i$ eine Gesamtdauer eines i-ten Segments der zweiten Sequenz ist,
  • $r_i$ ein Download-Abschlussverhältnis ist, das dem i-ten Segment zugeordnet ist, wobei das Download-Abschlussverhältnis repräsentativ für ein Verhältnis zwischen einer Anzahl von Chunks des Referenzsegments, die in dem Peer-to-Peer-Cache (10) vorhanden sind, und einer Gesamtzahl von Chunks des Referenzsegments ist,

• $w_i$ eine dem i-ten Segment zugewiesene Gewichtung ist, derart dass $w_i$ abnimmt, während ein Versatz zwischen dem i-ten Segment und einem letzten Segment des vom Player (14) abgespielten Datenstroms zunimmt.

9. Verfahren nach Anspruch 8, wobei $w_i = c^{p_i}$, wobei c eine Konstante kleiner oder gleich 1 ist und $p_i$ ein von i abhängiger Term ist.

10. Verfahren nach Anspruch 8, wobei

$$p_i = \sum_{j=0}^{j<i} r_j$$

wobei $r_j$ ein Download-Abschlussverhältnis ist, das einem j-ten Segment der zweiten Sequenz zugeordnet ist, das näher an dem letzten von dem Player (14) gespielten Segment liegt als das i-te Segment.

11. Verfahren zum Steuern eines Players (14) einer Client-Vorrichtung, wobei:

• die Client-Vorrichtung einen Peer-to-Peer-Cache (10) zum Speichern von Segmenten eines Datenstroms in einem Format umfasst, das für Übertragungen innerhalb eines Peer-to-Peer-Netzwerks geeignet ist, wobei jedes Segment Chunks umfasst,
• der Player (14) konfiguriert ist, zum:

◦ Abspielen von in einem Puffer (12) gespeicherten Segmenten des Datenstroms, und
◦ Anfordern, sobald eine zur Wiedergabe anstehende Datenmenge in dem Puffer (12) kleiner ist als ein Schwellenwertparameter des Players (14), dass andere Segmente des Datenstroms von dem Peer-to-Peer-Cache (10) zu dem Puffer (12) übertragen werden,

wobei das Verfahren Folgendes umfasst:

• während der Schwellenwertparameter des Players (14) einen ersten Wert aufweist, Bestimmen (100) eines Download-Abschlussverhältnisses, das einem Referenzsegment des Datenstroms zugeordnet ist, wobei das Download-Abschlussverhältnis ein Verhältnis zwischen einer Anzahl von Chunks des Referenzsegments, die in dem Peer-to-Peer-Cache (10) vorhanden sind, und einer Gesamtzahl von Chunks des Referenzsegments darstellt, wobei das Download-Abschlussverhältnis ein benötigtes Abschlussverhältnis ist, welches absteigt, während ein Abspielzeitversatz zwischen dem Referenzsegment und dem letzten von Player (14) abgespielten Segment des Datenstroms ansteigt,
• Berechnen (102) einer Punktzahl in Abhängigkeit von dem Download-Abschlussverhältnis,
• Ändern (106) des Schwellenwertparameters des Players (14) von dem ersten Wert auf einen zweiten Wert, der größer als der erste Wert ist, nur dann, wenn die Punktzahl eine vorbestimmte Bedingung erfüllt, wobei die vorbestimmte Bedingung erfüllt wird, wenn das Abschlussverhältnis des unvollständigen Segments kleiner als das benötigte Abschlussverhältnis ist, und
• Ändern des Schwellenwertparameters des Players (14) von dem zweiten Wert auf den ersten Wert, sobald die Menge der zur Wiedergabe anstehenden Daten im Puffer (12) größer als der zweite Wert wird.

12. Nichtflüchtiges computerlesbares Medium für eine Client-Vorrichtung, wobei die Client-Vorrichtung Folgendes umfasst:

• einen Peer-to-Peer-Cache (10) zum Speichern von Segmenten eines Datenstroms in einem Format, das für Übertragungen innerhalb eines Peer-to-Peer-Netzwerks angepasst ist, wobei jedes Segment mehrere Chunks umfasst,
• einen Player (14), konfiguriert, zum:

◦ Abspielen von in einem Puffer (12) gespeicherten Segmenten des Datenstroms, und

∘ Anfordern, sobald eine Menge von noch nicht abgespielten Segmenten in dem Puffer (12) unter einem konfigurierbaren Schwellenwert liegt, dass weitere Segmente des Datenstroms von dem Peer-to-Peer-Cache (10) zu dem Puffer (12) übertragen werden,

wobei das Medium Codeanweisungen einschließt, um die Client-Vorrichtung zu veranlassen, das Verfahren nach einem der Ansprüche 1 bis 11 zur Steuerung des Players (14) durchzuführen.

**Revendications**

1. Procédé permettant de contrôler un lecteur (14) d'un dispositif client, dans lequel :

• le dispositif client comprend un cache pair-à-pair (10) permettant de stocker des segments d'un flux de données dans un format adapté pour des transferts au sein d'un réseau pair-à-pair, chaque segment comprenant des chunks,
• le lecteur (14) est configuré pour :

∘ lire des segments du flux de données stockés dans un tampon (12), et
∘ dès qu'une quantité de données en attente de lecture dans le tampon (12) est inférieure à un paramètre de seuil du lecteur (14), demander que d'autres segments du flux de données soient transférés du cache pair-à-pair (10) au tampon (12),

dans lequel le procédé comprend :

• tandis que le paramètre de seuil du lecteur (14) présente une première valeur, la détermination (100) d'un rapport d'achèvement de téléchargement associé à un segment de référence du flux de données, le rapport d'achèvement de téléchargement étant représentatif d'un rapport entre un nombre de chunks du segment de référence qui sont présents dans le cache pair-à-pair (10) et un nombre total de chunks du segment de référence,
• le calcul (102) d'un score dépendant du rapport d'achèvement de téléchargement, dans lequel le score augmente au fur et à mesure que le rapport d'achèvement de téléchargement augmente,
• la modification (106) du paramètre de seuil du lecteur (14) de la première valeur à une seconde valeur supérieure à la première valeur uniquement si le score est inférieur à un second seuil, et
• la modification du paramètre de seuil du lecteur (14) de la seconde valeur à la première valeur dès que la quantité de données en attente de lecture dans le tampon (12) devient supérieure à la seconde valeur.

2. Procédé selon la revendication 1, comprenant en outre :

• la modification du paramètre de seuil du lecteur (14) de la seconde valeur à la première valeur dès la détection qu'un segment suivant à transférer dans le tampon (12) est un segment le plus récent du flux de données mis à disposition pour téléchargement par un réseau de livraison de contenu.

3. Procédé selon les revendications 1 ou 2, dans lequel le calcul du score (102) comprend la pondération du rapport d'achèvement de téléchargement avec un poids, dans lequel le poids diminue au fur et à mesure qu'un décalage du temps de lecture entre le segment de référence et un dernier segment du flux de données lu par le lecteur (14) augmente.

4. Procédé selon l'une quelconque des revendications 1 à 3, dans lequel le calcul du score (102) comprend la multiplication du rapport d'achèvement de téléchargement avec une durée totale du segment de référence.

5. Procédé selon l'une quelconque des revendications 1 à 4, dans lequel le score augmente quand la quantité de données en attente de lecture dans le tampon (12) augmente.

6. Procédé selon l'une quelconque des revendications 1 à 5, comprenant :

• le calcul de contributions à un score, respectivement associées à des segments formant une séquence dans le flux de données, dans lequel la séquence inclut le segment de référence,
• le calcul du score à partir de chaque contribution au score.

7. Procédé selon l'une quelconque des revendications 1 à 6, dans lequel le score est calculé comme une somme de :

• une première contribution au score associée aux données en attente dans le tampon (12),
• une deuxième contribution au score associée à une première séquence de segments consécutifs du flux de données qui sont pleinement stockés dans le cache pair-à-pair (10), dans lequel la première séquence doit être lue directement après les données en attente dans le tampon (12),
• une troisième contribution au score associée à une seconde séquence de segments consécutifs du flux de données qui sont au moins partiellement stockées dans le cache pair-à-pair (10), dans lequel la seconde séquence doit être lue directement après la première séquence.

8. Procédé selon la revendication 7, dans lequel la troisième contribution au score augmente quand $d_i r_i w_i$ augmente, dans lequel :

• $d_i$ est une durée totale d'un $i^{\text{ème}}$ segment de la seconde séquence,
• $r_i$ est un rapport d'achèvement du téléchargement associé au $i^{\text{ème}}$ segment, le rapport d'achèvement de téléchargement étant représentatif d'un rapport entre un nombre de chunks du segment de référence qui sont présents dans le cache pair-à-pair (10) et un nombre total de chunks du segment de référence,
• $w_i$ est un poids attribué au $i^{\text{ème}}$ segment, de sorte que $w_i$ diminue au fur et à mesure qu'un décalage entre le $i^{\text{ème}}$ segment et un dernier segment du flux de données lu par le lecteur (14) augmente.

9. Procédé selon la revendication 8, dans lequel $w_i = c^{p_i}$, dans lequel c est une constante inférieure ou égale à 1, et $p_i$ est un terme dépendant de $i$.

10. Procédé selon la revendication 8, dans lequel :

$$p_i = \sum_{j=0}^{j<i} r_j$$

dans lequel $r_j$ est un rapport d'achèvement de téléchargement associé à un $j^{\text{ème}}$ segment de la seconde séquence qui est plus proche du dernier segment lu par le lecteur (14) que le $i^{\text{ème}}$ segment.

11. Procédé de commande d'un lecteur (14) d'un dispositif client, dans lequel :

• le dispositif client comprend un cache pair-à-pair (10) permettant de stocker des segments d'un flux de données dans un format adapté pour des transferts au sein d'un réseau pair-à-pair, chaque segment comprenant des chunks,
• le lecteur (14) est configuré pour :

  ◦ lire des segments du flux de données stockées dans un tampon (12), et
  ◦ dès qu'une quantité de données en attente de lecture dans le tampon (12) est inférieure à un paramètre seuil du lecteur (14), demander que d'autres segments du flux de données soient transférés du cache pair-à-pair (10) au tampon (12),

dans lequel le procédé comprend :

• tandis que le paramètre seuil du lecteur (14) présente une première valeur, la détermination (100) d'un rapport d'achèvement de téléchargement associé à un segment de référence du flux de données, le rapport d'achèvement de téléchargement étant représentatif d'un rapport entre un nombre de chunks du segment de référence qui sont présents dans le cache pair-à-pair (10) et un nombre total de chunks du segment de référence, dans lequel le rapport d'achèvement de téléchargement est un rapport d'achèvement requis qui diminue lorsque le décalage de temps de lecture entre le segment de référence et un dernier segment du flux de données lu par le lecteur (14) augmente,
• le calcul (102) d'un score dépendant du rapport d'achèvement de téléchargement,
• la modification (106) du paramètre de seuil du lecteur (14) de la première valeur à une seconde valeur supérieure à la première valeur uniquement si le score respecte une condition prédéfinie, dans lequel la condition prédéfinie est respectée quand le rapport d'achèvement du segment incomplet est inférieur au rapport d'achèvement requis, et

• la modification du paramètre de seuil du lecteur (14) de la seconde valeur à la première valeur dès que la quantité de données en attente de lecture dans le tampon (12) devient supérieure à la seconde valeur.

12. Support lisible sur ordinateur non-transitoire pour un dispositif client, le dispositif client comprenant :

• un cache pair-à-pair (10) permettant de stocker des segments d'un flux de données dans un format adapté pour des transferts dans un réseau pair-à-pair, chaque segment comprenant plusieurs chunks,
• un lecteur (14) est configuré pour :

◦ lire des segments du flux de données stockées dans un tampon (12), et
◦ dès qu'une quantité de segments pas encore lus dans le tampon (12) est inférieure à un seuil configurable, demander que d'autres segments du flux de données soient transférés du cache pair-à-pair (10) au tampon (12),

dans lequel le support comprend des instructions de code permettant d'amener le dispositif client à mettre en oeuvre le procédé selon l'une quelconque des revendications 1 à 11 pour commander le lecteur (14).

FIG. 1

FIG. 2

Determining a download completion ratio of at least one segment to be transferred from the P2P cache to the buffer — 100

Computing a score depending on the download completion ratio — 102

104 — The score meets a condition ? — NO

YES

setting a threshold parameter used by the player from a first value to a second value greater than the first value — 106

FIG. 3

FIG. 4

FIG. 5

$$\sum_{j=0}^{j<i} r_j$$

$$c^{\sum_{j=0}^{j<i} r_j}$$

FIG. 6

FIG. 7

FIG. 8

**EP 4 016 954 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012154287 A

- US 2020351317 A